# EUROPÄISCHE PATENTSCHRIFT

(11) **EP 1 493 956 B1**
(45) Veröffentlichungstag und Bekanntmachung des Hinweises auf die Patenterteilung: **27.10.2010**
(21) Anmeldenummer: 03014897.7
(22) Anmeldetag: 01.07.2003
(51) Int. Cl.: F16L 11/08, B32B 1/08, B32B 25/10

(54) **Schlauch**
Hose
Tuyau flexible

(43) Veröffentlichungstag der Anmeldung: 05.01.2005
(73) Patentinhaber: ContiTech Schlauch GmbH, 30165 Hannover (DE)
(72) Erfinder: Besche, Anton, 34497 Korbach (DE); Kuhn, Hans-Jürgen, 34477 Twistetal (DE)
(74) Vertreter: Finger, Karsten

(56) Entgegenhaltungen:
- DE-A- 3 938 184
- DE-A- 3 938 185
- US-A- 6 037 025

## Beschreibung

Die Erfindung betrifft einen Schlauch, insbesondere einen Hydraulikschlauch, aufweisend Schichten aus vulkanisierten Kautschukmischungen und Lagen aus Geflechten.

Schläuche, die zum Fördern von Gasen oder Flüssigkeiten unter sehr hohen Drücken dienen, weisen in der Regel Schichten aus gas- und flüssigkeitsdichtem Elastomer (vulkanisierte Kautschukmischungen) auf und sind mit Verstärkungslagen aus textilen oder metallischen Materialien verstärkt. So ist z. B. aus der DE 38 40 584 A1 ein Druckschlauch bekannt, der einen elastomeren Innenschlauch, eine den Innenschlauch umgebende erste Geflechtslage, eine elastomere Zwischenlage, eine zweite Geflechtslage und einen Außenmantel aus Gummi aufweist.

In der US 6,037,025 ist ein wärme- und ölbeständiger Servolenkungsschlauch beschrieben, der eine innere Innenschicht aus hydriertem Nitrilkautschuk, eine äußere Innenschicht aus einem Dienkautschuk, eine auf der Innenschicht aufgebaute Nylongeflechtslage und eine Außenschicht aus einem synthetischen Kautschuk aufweist.

In der DE 100 16 120 A1 sind Schläuche mit hoher Hitzebständigkeit, ausreichendem Modul und Beständigkeit gegenüber Druckverformung offenbart, die ein inneres Rohr aus hydriertem Nitrilkautschuk, eine Verstärkungsschicht aus vermessingten Stahldrähten und eine äußere Umhüllung aus Ethylen-Acrylester-Copolymerkautschuk aufweisen.

In DE3938184 sind 5-lagige hitze- und ölbeständige Schläuche beschrieben, die eine Innenschicht aus HNBR, sowie zwei weitere Kautschuk- und Verstärkungsschichten aufweisen.

Der vorliegenden Erfindung liegt die Aufgabe zu Grunde, einen Schlauch, insbesondere einen Hydraulikschlauch, für die Verwendung im Höchstdruckbereich bereitzustellen, der bei Temperaturen von 135 °C und mehr dauerhaft dynamisch belastbar ist.

Gelöst wird diese Aufgabe erfindungsgemäß durch einen Schlauch, der von innen nach außen zumindest
- eine hochtemperaturbeständige Innenschicht aus einer vernetzten Kautschukmischung,
- eine Textilgeflechtslage mit einem Abdeckungsgrad von mindestens 80 %,
- eine Zwischenschicht aus einer vernetzten Kautschukmischung auf der Basis von hydriertem Nitrilkautschuk, die 2 bis 30 phr zumindest eines Metallsalzes der Methacryl- und/oder der Acrylsäure enthält,
- eine Stahldrahtgeflechtslage, wobei die Einzelstränge des Geflechts vermessingt sind,
- und eine hochtemperaturbeständige Außenschicht aus einer vernetzten Kautschukmischung aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. In der Kautschukmischung addieren sich die phr-Anteile der verschiedenen Kautschuke zu 100.

Nur durch die spezielle Kombination der Verwendung von hydriertem Nitrilkautschuk mit 2 bis 30 phr eines Metallsalzes der Methacryl- und/oder Acrylsäure für die Zwischenschicht mit der inneren Textilgeflechtslage und der äußeren Stahldrahtgeflechtslage und der hochtemperaturbeständigen Innen- und Außenschicht gemäß dem erfindungsgemäßen Schlauchaufbau kann ein Schlauch bereitgestellt werden, der extremen Drücken bei besonders hohen Temperaturen standhält und der sich durch eine besonders gute Haltbarkeit bei dauernden hohen Druckwechseln auszeichnet. Solche Eigenschaften werden insbesondere von Hydraulikschläuchen für den Höchstdruckbereich gefordert.

Bei hohen Drücken und hohen Temperaturen würde ein herkömmlicher Gummi erweichen und durch eine Stahldrahtgeflechtslage hindurchgedrückt werden. Der erfindungegemäße Schlauch ermöglicht aber zum einen durch den Anteil eines Metallsalzes der Methacrylund/oder Acrylsäure in der Zwischenschichtmischung aus hydriertem Nitrilkautschuk, die sich durch eine hohe Temperaturbeständigkeit auszeichnet, eine chemische Anbindung an die vermessingten Einzelstränge des Stahldrahtgeflechts, so dass die Schicht fester an den Stahl gebunden ist und dynamischen Dauerbelastungen bei hohen Temperaturen widersteht. Zum anderen schützt die unter dem Stahldrahtgeflecht eingebrachte Textilgeflechtslage mit dem hohen Abdeckungsgrad , die auch als Stützgeflecht bezeichnet werden kann, vor Durchschlägen bei Druckimpulsbeanspruchung.

Außerdem zeichnen sich erfindungsgemäße Schläuche durch eine sehr gute Beständigkeit gegen additivhaltige Öle, Hydraulikflüssigkeiten und Bremsflüssigkeiten aus.

Die Innenschicht des Schlauches kann aus vernetzten Kautschukmischungen auf der Basis von verschiedenen Kautschuken (auch Verschnitte verschiedener Kautschuke), bevorzugt auf der Basis von hochtemperaturbeständigen Kautschuken, aufgebaut sein. Gemäß einer vorteilhaften Weiterbildung der Erfindung ist die Innenschicht aber aus einer vernetzten Kautschukmischung auf der Basis von hydriertem Nitrilkautschuk, die 2 bis 30 phr zumindest eines Metallsalzes der Methacryl- und/oder der Acrylsäure enthält, gebildet. Schläuche mit einer solchen Innenschicht zeichnen sich durch eine besonders gute Chemikalienbeständigkeit, z. B. gegen Hydrauliköle, auch bei sehr hohen Temperaturen aus.

Die Außenschicht des Schlauches kann ebenfalls aus vernetzten Kautschukmischungen auf der Basis von verschiedenen Kautschuken (auch Verschnitte verschiedener Kautschuke), bevorzugt auf der Basis von hochtemperaturbeständigen Kautschuken wie hydriertem Nitrilkautschuk oder chlorsulfoniertem Polyethylen (CSM), aufgebaut sein. Auch für die Außenschicht hat es sich als vorteilhaft erwiesen, wenn sie aus einer vernetzten Kautschukmischung auf der Basis von hydriertem Nitrilkautschuk, die 2 bis 30 phr zumindest eines Metallsalzes der Methacryl- und/oder der Acrylsäure enthält, gebildet ist, da so hohe Chemikalien- und Temperaturbeständigkeit des Schlauches erzielt werden kann. Außerdem werden für die Zwischenschicht und Außenschicht sowie ggf. die Innenschicht Kautschukmischungen auf gleicher Basis verwendet, so dass Unverträglichkeiten zwischen den Schichten vermieden werden und eine gute Haftung gewährleistet ist.

Für besonders hohe Temperaturbeständigkeit des Schlauches weist der hydrierte Nitrilkautschuk einen Restdoppelbindungsgehalt von weniger als 5 % auf; so kann z. B. ein hydrierter Nitrilkautschuk mit einem Restdoppelbindungsanteil von weniger als 1 % verwendet werden.

Um die Temperaturbeständigkeit weiter zu verbessern, hat es sich als vorteilhaft erwiesen, wenn die Kautschukmischung mit dem hydrierten Nitrilkautschuk peroxidisch vernetzt ist. Als peroxidische Vernetzungschemikalien können dabei alle dem Fachmann für die radikalische Vernetzung bekannten organischen Peroxide, z. B. 2,5-Dimethyl, 2,5-di-t-butylperoxyhexan oder Dicumylperoxid, die in der Regel mit geeigneten Coaktivatoren, z. B. Triallylisocyanurat, eingesetzt werden, verwendet werden.

Gemäß einer bevorzugten Weiterbildung der Erfindung wird als Metallsalz der Acrylsäure Zinkdiacrylat eingesetzt. Es hat sich herausgestellt, dass man mit diesem Salz in der Zwischen- und ggf. Außenschicht eine besonders gute Anbindung an Einzelstränge der Stahldrahtgeflechtslage erzielen kann. Das Metallsalz der Methacryl- und/oder der Acrylsäure kann der Mischung als reine Substanz zugemischt werden. Es ist aber auch möglich, dass das Metallsalz bereits mit einem hydrierten Nitrilkautschuk als so genannter Masterbatch vorgemischt ist, welcher für die Mischung dann mit weiterem Kautschuk und weiteren Mischungsbestandteilen vermengt wird.

Die Kautschukmischungen für die Innen-, Zwischen- und Außenschicht des Schlauches können neben den bereits genannten Substanzen weitere in der Kautschukindustrie übliche Zusatzstoffe, wie z. B. Füllstoffe (z. B. Ruß, Kieselsäure), Alterungsschutzmittel, Weichmacher und Verarbeitungshilfsmittel enthalten.

Der erfindungsgemäße Schlauch weist zum Schutz vor Durchschlägen eine Textilgeflechtslage mit einem Abdeckungsgrad von mindestens 80 % auf, d. h. die unter dem Textilgeflecht liegende Innenschicht wird bei der Aufbringung des Textilgeflechts zumindest zu 80 % abgedeckt. Besonders bevorzugt ist, wenn ein Abdeckungsgrad von mehr als 95 % , insbesondere von nahezu 100 %, in der Textilgeflechtslage realisiert wird.

Als Material für das Textilgeflecht können Polyester-, Polyamid-, Aramid- oder andere Garne mit hoher Temperaturbeständigkeit verwendet werden. Vorzugsweise besteht die Textilgeflechtslage aus aufgeflochtenem Polyamidgarn. Die Garne können mit oder ohne zusätzliche Imprägnierung und mit unterschiedlichsten Feinheiten eingesetzt werden.

Gemäß einer vorteilhaften Weiterbildung der Erfindung besteht die Stahldrahtgeflechtslage, die auf die Zwischenschicht aufgebracht wird, aus vermessingtem Federstahldraht, der eine hohe dynamische Festigkeit des Schlauches bewirkt. Der Draht kann dabei Durchmesser von 0,2 bis 0,4 mm und Zugfestigkeiten von 1800 bis 3500 N/mm² aufweisen.

Der erfindungsgemäße Schlauch kann nach herkömmlichen Verfahren hergestellt werden. So kann z. B. auf die auf einen Dorn extrudierte Innenschicht die Textilgeflechtslage nach dem Klöppelverfahren aufgeflochten werden. Danach wird dann die Zwischenschicht aufextrudiert oder in Form einer Platte aufgebracht. Anschließend wird das Stahlgeflecht aufgeflochten und auf dieses die Außenschicht extrudiert. Schließlich wird der Schlauch vulkanisiert.

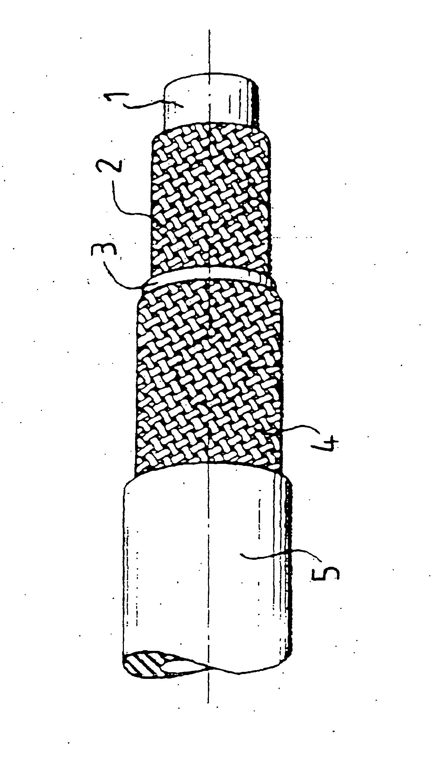

Die Erfindung wird nun anhand der Zeichnung, die ein Ausführungsbeispiel darstellt, näher erläutert. Dabei zeigt die einzige Zeichnungsfigur schematisch einen erfindungsgemäßen Schlauch in abgestuft aufgeschnittener Seitenansicht.

Der Schlauch in der Figur weist eine hochtemperaturbeständige Innenschicht 1 aus einer vernetzten Kautschukmischung, eine darauf aufgeflochtene Textilgeflechtslage 2 aus Polyamid mit einem Abdeckungsgrad von mindestens 80 %, eine Zwischenschicht 3 aus einer vernetzten Kautschukmischung auf der Basis von hydriertem Nitrilkautschuk, die 2 bis 30 phr eines Metallsalzes der Methacryl- und/oder Acrylsäure enthält, eine Stahldrahtgeflechtslage 4 aus vermessingten Federstahldrähten und eine hochtemperaturbeständige Außenschicht 5 aus einer vernetzten Kautschukmischung auf.

In der Tabelle 1 ist ein Beispiel einer Mischung für die Zwischenschicht 3 und ggf. die Innen- 1 und/oder Außenschicht 5 des erfindungsgemäßen Schlauches angegeben.

**Tabelle 1**

| **Mischungsbestandteil** | **Menge in phr** |
|---|---|
| Hydrierter Nitrilkautschuk* | 100 |
| Zinkdiacrylat | 7,8 |
| Ruß N550 | 50 |
| Magnesiumoxid | 2 |
| Alterungsschutzmittel | 1 |
| Weichmacher | 5 |
| Triallylisocyanurat | 2 |
| Peroxid auf Inertmaterial** | 7,5 |

| | |
|---|---|
| * Restdoppelbindungsgehalt < 2 %, Acrylnitrilgehalt: 34 Gew.-% bezogen auf Polymer | |
| ** Bis-(tert.-butyl-peroxy-isopropyl)-benzol, Peroxidgehalt 40 % | |

Ein Schlauch mit einer Mischung gemäß Tabelle 1 für die Innen-, Zwischen- und Außenschicht zeichnet sich durch eine dauerhafte dynamische Belastbarkeit im Höchstdruckbereich bei hohen Temperaturen aus und kann z. B. als Hydraulikschlauch verwendet werden.

Ein Schlauch mit Innen-, Zwischen- und Außenschicht aus einer Mischung gemäß Tabelle 1, einer Stahldrahtgeflechtslage aus vermessingtem Stahlfederdraht mit einer Zugefestigkeit von 2650 ± 150 N/mm² und einer Textilgeflechtslage aus Polyamid-6.6-gam wurde hinsichtlich seiner dynamischen Belastbarkeit mit anderen Schläuchen, die ähnlich aufgebaut waren verglichen; die Ergebnisse sind in Tabelle 2 aufgelistet. Schlauch I war erfindungsgemäß aufgebaut, bei Schlauch II wurde auf die Textilgeflechtslage und auf die Zwischenschicht verzichtet und Schlauch III war analog Schlauch I aufgebaut, nur die Zwischenschicht enthielt kein Metallsalz der Methacryl- und/oder der Acrylsäure. Es wurden Hydraulik-Druck-Impulsprüfungen ohne Biegung gemäß DIN EN ISO 6803 durchgeführt. Die Prüftemperatur betrug 135 °C und der Prüfdruck 230 bar bei einer Druckanstiegs- und Druckabfallzeit von 0,2 s und einer Druckhalte- und Drucknullzeit von 0,65 s. Die Prüffrequenz betrug 0,588 Hz und der Probekörper war um 180 °C gebogen. Als Prüfflüssigkeit wurde ATF Pentosin CHF verwendet. Die Zahl der Zyklen bis zum Ausfall wurde bestimmt. Außerdem wurde die Trennkraft für die Trennung Zwischenschichtgummi-Stahl bestimmt.

**Tabelle 2**

| **Schlauchtyp** | **Zyklen bis zum Ausfall** | **Trennkraft Zwischenschichtgummi-Stahl [N/mm]** |
|---|---|---|
| I (erfindungsgemäß) | > 500000 | Keine Trennung Zwischenschichtgummi-Stahl, Kohäsionsbruch im Gummi der Zwischenschicht |
| II (ohne Textillage) | ≤ 175000 | Keine Trennung Zwischenschichtgumm-Stahl, Kohäsionsbruch im Gummi der Zwischenschicht |
| III (Zwischenschicht ohne Metallsalz) | < 50000 | < 0,5 |

Aus der Tabelle 2 wird ersichtlich, dass die erfindungsgemäßen Schläuche mehr als 500000 Zyklen bis zum Ausfall erreichen. Bei den anderen Schläuchen treten hingegen schon vorher Ausfälle insbesondere durch Durchschläge auf.

## Patentansprüche

1. Schlauch, insbesondere Hydraulikschlauch, aufweisend von innen nach außen zumindest
- eine hochtemperaturbeständige Innenschicht (1) aus einer vernetzten Kautschukmischung,
- eine Textilgeflechtslage (2) mit einem Abdeckungsgrad von mindestens 80 %,
- eine Zwischenschicht (3) aus einer vernetzten Kautschukmischung auf der Basis von hydriertem Nitrilkautschuk, die 2 bis 30 phr zumindest eines Metallsalzes der Methacryl- und/oder der Acrylsäure enthält,
- eine Stahldrahtgeflechtslage (4), wobei die Einzelstränge des Geflechts vermessingt sind,
- und eine hochtemperaturbeständige Außenschicht (5) aus einer vernetzten Kautschukmischung.

2. Schlauch nach Anspruch 1, **dadurch gekennzeichnet, dass** die Innenschicht (1) aus einer vernetzten Kautschukmischung auf der Basis von hydriertem Nitrilkautschuk, die 2 bis 30 phr zumindest eines Metallsalzes der Methacryl- und/oder Acrylsäure enthält, gebildet ist.

3. Schlauch nach Anspruch 1 oder 2, **dadurch gekennzeichnet, dass** die Außenschicht (5) aus einer vernetzten Kautschukmischung auf der Basis von hydriertem Nitrilkautschuk, die 2 bis 30 phr zumindest eines Metallsalzes der Methacryl- und/oder der Acrylsäure enthält, gebildet ist.

4. Schlauch nach zumindest einem der vorgehenden Ansprüche, **dadurch gekennzeichnet, dass** der hydrierte Nitrilkautschuk einen Restdoppelbindungsgehalt von weniger als 5 % aufweist.

5. Schlauch nach zumindest einem der vorgehenden Ansprüche, **dadurch gekennzeichnet, dass** die Kautschukmischung mit dem hydrierten Nitrilkautschuk peroxidisch vernetzt ist.

6. Schlauch nach zumindest einem der vorgehenden Ansprüche, **dadurch gekennzeichnet, dass** als Metallsalz der Acrylsäure Zinkdiacrylat eingesetzt wird.

7. Schlauch nach zumindest einem der vorhergehenden Ansprüche, **dadurch gekennzeichnet, dass** die Textilgeflechtslage (2) aus aufgeflochtenem Polyamidgarn besteht.

8. Schlauch nach zumindest einem der vorhergehenden Ansprüche, **dadurch gekennzeichnet, dass** die Stahldrahtgeflechtslage (4) aus vermessingten Federstahldrähten besteht.

## Claims

1. Hose, more particularly hydraulic hose, including from in to out at least
- a high temperature resistant inner layer (1) formed of a crosslinked rubber mixture,
- a textile braid ply (2) providing a coverage of at least 80%,
- an interlayer (3) formed of a crosslinked rubber mixture based on hydrogenated nitrile rubber and containing 2 to 30 phr of at least one metal salt of methacrylic and/or acrylic acid,
- a steel wire braid ply (4) wherein the individual strands of the braid are brass plated,
- and a high temperature resistant outer layer (5) formed of a crosslinked rubber mixture.

2. Hose according to Claim 1, **characterized in that** the inner layer (1) is formed of a crosslinked rubber mixture based on hydrogenated nitrile rubber and containing 2 to 30 phr of at least one metal salt of methacrylic and/or acrylic acid.

3. Hose according to Claim 1 or 2, **characterized in that** the outer layer (5) is formed of a crosslinked rubber mixture based on hydrogenated nitrile rubber and containing 2 to 30 phr of at least one metal salt of methacrylic and/or acrylic acid.

4. Hose according to at least one of the preceding claims, **characterized in that** the hydrogenated nitrile rubber has a residual double bond content of less than 5%.

5. Hose according to at least one of the preceding claims, **characterized in that** the rubber mixture comprising the hydrogenated nitrile rubber is peroxidically crosslinked.

6. Hose according to at least one of the preceding claims, **characterized in that** the metal salt of acrylic acid is zinc diacrylate.

7. Hose according to at least one of the preceding claims, **characterized in that** the textile braid ply (2) consists of polyamide yarn applied by braiding.

8. Hose according to at least one of the preceding claims, **characterized in that** the steel wire braid ply (4) consists of brass-plated spring steel wires.

## Revendications

1. Tuyau flexible, notamment tuyau hydraulique flexible, comprenant de l'intérieur vers l'extérieur au moins
- une couche interne (1) résistante aux températures élevées en un mélange de caoutchouc réticulé,
- une couche de maille textile (2) d'un degré de recouvrement d'au moins 80 %,
- une couche intermédiaire (3) en un mélange de caoutchouc réticulé à base de caoutchouc de nitrile hydrogéné qui contient 2 à 30 phr d'au moins un sel métallique de l'acide méthacrylique et/ou acrylique,
- une couche de maille en fils d'acier (4), les filaments individuels de la maille étant laitonnés,
- et une couche externe (5) résistante aux températures élevées en un mélange de caoutchouc réticulé.

2. Tuyau flexible selon la revendication 1, **caractérisé en ce que** la couche interne (1) en un mélange de caoutchouc réticulé est formée à base de caoutchouc de nitrile hydrogéné qui contient 2 à 30 phr d'au moins un sel métallique de l'acide méthacrylique et/ou acrylique.

3. Tuyau flexible selon la revendication 1 ou 2, **caractérisé en ce que** la couche externe (5) en un mélange de caoutchouc réticulé est formée à base de caoutchouc de nitrile hydrogéné qui contient 2 à 30 phr d'au moins un sel métallique de l'acide méthacrylique et/ou acrylique.

4. Tuyau flexible selon au moins l'une quelconque des revendications précédentes, **caractérisé en ce que** le caoutchouc de nitrile hydrogéné présente une teneur résiduelle en doubles liaisons inférieure à 5 %.

5. Tuyau flexible selon au moins l'une quelconque des revendications précédentes, **caractérisé en ce que** le mélange de caoutchouc avec le caoutchouc de nitrile hydrogéné est réticulé peroxydiquement.

6. Tuyau flexible selon au moins l'une quelconque des revendications précédentes, **caractérisé en ce que** le diacrylate de zinc est utilisé en tant que sel métallique de l'acide acrylique.

7. Tuyau flexible selon au moins l'une quelconque des revendications précédentes, **caractérisé en ce que** la couche de maille textile (2) est constituée d'un fil de polyamide dénatté.

8. Tuyau flexible selon au moins l'une quelconque des revendications précédentes, **caractérisé en ce que** la couche de maille en fils d'acier (4) est constituée de fils d'acier à ressorts laitonnés.
